(19) Europäisches Patentamt
European Patent Office
Office européen des brevets

(11) **EP 1 978 450 A2**

(12) **EUROPEAN PATENT APPLICATION**

(43) Date of publication:
**08.10.2008 Bulletin 2008/41**

(51) Int Cl.:
***G06F 17/15*** (2006.01)

(21) Application number: **08251187.4**

(22) Date of filing: **28.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.04.2007 US 910626 P**
**12.09.2007 US 854215**

(71) Applicant: **Technology Properties Limited Cupertino, CA 95014 (US)**

(72) Inventor: **Montvelishsky, Michael B. Burlingame, CA 94010 (US)**

(74) Representative: **Beresford, Keith Denis Lewis BERESFORD & Co.**
**16 High Holborn**
**London**
**WC1V 6BX (GB)**

(54) **Signal processing**

(57) A system (10) for calculating a convolution of a data function with a filter function utilizing an array (12) of processors (14) including first and last processors. A coefficient value based on a derivation of the filter function and a data value representative of the data function are multiplied to produce a current intermediate value. Except in the first processor, a prior intermediate value is then added to the current intermediate value. Except in the last processor, the data and current intermediate values are then sent to the next processor. Then the last processor's prior intermediate value, if any, is added to its current intermediate value to produce a result value, wherein the result values collectively are representative of the convolution of the data function with the filter function.

FIG. 1

EP 1 978 450 A2

**Description**

BACKGROUND OF THE INVENTION

TECHNICAL FIELD

The present invention relates generally to signal processors, a process of signal processing.

BACKGROUND ART

Many existing and emerging systems can be analyzed using modem digital processors that are suitably programmed based upon mathematics that describe the underlying systems. For example, such analysis today is increasingly useful for analyzing linear time-invariant systems, such as electrical circuits, optical devices, mechanical mechanisms, and many other systems.

In mathematics and in many fields that use it extensively, such as most branches of the sciences and engineering today, the term "transform" is used to refer to a class of equation analysis techniques. The concept of the transform traces back to the functional analysis branch of mathematics, which primarily deals with the study of spaces of functions where a particular function has as its argument another function. Transforms thus can be used with an individual equation or with entire sets of equations, wherein the process of transformation is a one-to-one mapping of the original equation or equations represented in one domain into another equation or equations represented in a separate domain.

The motivation for performing transformation is often straightforward. There are many equations that are difficult to solve in their original representations, yet which may be more easily solvable in one or more other representations. Thus, a transform may be performed, a solution found, and then an inverse transform performed to map the solution back into the original domain. The general form of an integral transform is defined as:

$$(1) \quad g(\alpha) = \int_a^b f(t) K(\alpha, t) dt ,$$

where $K(\alpha, t)$ is often referred to as the "integral kernel" of the transform.

The Laplace transform is a subset of the class of transforms defined by equation (1) and it is often particularly useful. Given a simple mathematical or functional description of an input to or an output from a system, the Laplace transform can provide an alternative functional description that may simplify analyzing the behavior of the system. The general form of the Laplace transform is defined as:

$$(2) \quad \mathcal{L}\{f(t)\} = \int_0^\infty e^{-st} f(t) dt ,$$

where the limits of integration and the integral kernel are redefined from equation (1) as $a = 0$, $b$ is replaced by $\infty$, and $K(\alpha, t) = e^{-st}$. The use of a Laplace transform on $f(t)$ is only possible when $s$ is sufficiently large and certain conditions are met, but these conditions are usually flexible enough to allow $f(t)$ to take on the functional form of nearly any useful function that is found in practice.

It is a common occurrence that a certain function, say, $F(s)$ is not the transform of a single known function but can be represented as the product of two functions that are each the result of the transform of a known function $f(t)$ or $g(t)$, respectively. That is,

$$(3) \quad F(s) = \hat{f}(s) \hat{g}(s) ,$$

where $g(t)$ must satisfy the same conditions as $f(t)$. From this link between $F(s)$, $f(t)$, and $g(t)$ the following relationship holds:

$$F(s) = \mathcal{L}\left\{\int_0^t f(t-\tau)g(\tau)d\tau\right\},$$

(4)

which is often referred to as the "convolution theorem."

It can be observed that the convolution theorem results in a transformation of an integral of just one variable. Therefore the techniques for numerical approximation of an integral of just one variable can be applied.

The following equality holds between the integral representation and the Riemann sum representation:

$$\int_0^t f(t-\tau)g(\tau)d\tau = \lim_{k\to 0}\sum_{k=0}^t f(c_{t-k})g(c_k)\Delta\tau,$$

(5)

where each $c_{t-k}$ and $c_k$ are chosen arbitrarily in the $k^{th}$ subinterval. In practice the right hand side of the equality in equation (5) is approximated by utilizing a very small $\Delta\tau$ and realizing that there exists an error term of some order dependent on the numerical technique chosen and the value of $\Delta\tau$. Thus:

$$\lim_{k\to 0}\sum_{k=0}^t f(c_{t-k})g(c_k)\Delta\tau = \sum_{k=0}^t f(c_{t-k})g(c_k)\Delta\tau + O(\Delta\tau^m),$$

(6)

where $m$ is the order of accuracy that can be represented by the resultant sum (and also the number of digits of precision that can be expected) and O is big-O notation in the traditional mathematics context.

As implied in passing above, there are existing and potential uses in important applications for transforms that can benefit from the use of convolution. For instance, one such application is the use of convolution in conjunction with digital filtering that is performed in digital signal processing (DSP).

Any filtering that can be expressed as a mathematical function can be achieved through the use of a digital filter, and this is one of the very foundations of modem DSP practice. For example, digital filtering on data values sampled from a signal permits removing unwanted parts of the signal or extracting the useful parts of the signal. The finite impulse response (FIR) and the infinite impulse response (IIR) are the two main types of digital filters used in DSP applications today, with the more common being the FIR filter.

The FIR filter is usually considered advantageous to use because it does not require internal feedback, which can, for example, cause an IIR filter to respond indefinitely to an impulse. The word "finite" in its name also implies another advantage of the FIR filter. The impulse from such a filter ultimately settles to zero, and errors in the iterative summing calculations used do not propagate. That is, the error term stays constant throughout the entire calculation process. This is a distinct advantage over an IIR filter, for example, where error can potentially grow for each additional iterative output sum.

Unfortunately, for many applications a major limitation of a digital filter is that its speed is restricted by the speed of the processor or processors used for numerical calculations. If high filtering speeds are required, for instance, this can make the hardware needed to implement a digital filter expensive or simply unattainable. For virtually all applications, and holding true generally for most electronics-based systems, the higher the speed being employed the harder it also becomes to deal with coincidental effects, such as suppressing electromagnetic noise and dissipating heat.

It therefore follows that improving the systems which we use for performing numerical convolution calculations will allow us to perform current and emerging signal processing related tasks at higher speeds, more economically, and with reduced detrimental effects in the underlying and peripheral systems.

BRIEF SUMMARY OF THE INVENTION

An embodiment of the present invention uses a system for convolution calculation comprising multiple computer processors.

A first aspect of the present invention provides a system for calculating a convolution of a data function with a filter function. An array of processors is provided that includes first and last processors and that each include a logic to multiply a coefficient value that is based on a derivation of the filter function and a data value that is representative of the data function to produce a current intermediate value. In the processors other than the first one, a logic is provided to receive a prior intermediate value that is representative of a previously performed calculation in another of the processors and to add that prior intermediate value to the current intermediate value. In the processors other than the last one, a logic is provided to send the data value and the current intermediate value to another processor. A logic is further provided to hold a prior intermediate value, if any, from the last processor as a prior partial value and to add this prior partial value to the current intermediate value from the last processor to produce a result value. The array of processors thus receives a series of the data values and produces a series of the result values that collectively are representative of the convolution of the data function with the filter function.

An embodiment of the first aspect provides a signal processor having means for providing, from a signal to be processed, data values which represent the signal, and the said system for calculating the convolution of the data representing the signal with a filter function. The embodiment is for example a digital filter.

The first aspect of the present invention also provides a process for calculating a result value in a convolution of a data function with a filter function. A sequence of coefficient values are obtained that are based on a derivation of the filter function. For a data value that is representative of the data function, the coefficient values are then used in a pipeline of computerized processors including a first and last processors to multiply one of the coefficient values and the data value to produce current intermediate values. Other than in the first processor, a prior intermediate value that is representative of a previously performed calculation in another of the processors is added to the current intermediate value. Other than in the last processor, the data value and current intermediate value are sent to a subsequent processor. A prior partial value, if any, is added to the current intermediate value from the last processor to produce a result value, wherein this prior partial value is a previous intermediate value from the last processor. And the result value is output to a digital signal processor employing the process.

An embodiment of the first aspect also provides a method of processing a signal comprising providing, from a signal to be processed, data values which represent the signal and the said process for calculating the convolution of the data values with the filter function. The process is for example a signal filtering process.

A second aspect of the present invention provides a process and a corresponding system for calculating a convolution of a data function with a filter function. A sequence of coefficient values are obtained that are based on a derivation of the filter function and a sequence of data values are obtained that are representative of the data function. For each such data value, with respect to each such coefficient value, in a pipeline of computerized processors including a first and last processors, the coefficient value and the data value are multiplied to produce a current intermediate value. Other than in the first processor, a prior intermediate value that is representative of a previously performed calculation in another of the processors is then added to the current intermediate value. Other than in the last processor, the data value and the current intermediate value are sent to a subsequent processor. A prior partial value, if any, is added to the current intermediate value from the last processor to produce a result value, wherein the prior partial value is a previous intermediate value from the last processor. These result values are accumulated as the convolution, and the convolution is output to a digital signal processor employing the process.

An embodiment of the second aspect provides a signal processing method, and corresponding system, comprising providing, from a signal to be processed, data values which represent the signal and the said process for calculating the convolution of the data values with the filter function. The process is for example a signal filtering process.

A third aspect of the present invention provides an improved system for calculating a convolution of the type in which at least one processor multiplies a coefficient value that is representative of a filter function with a data value that is representative of a data function. The improvement comprises the coefficient value being based on a derivation of the filter function.

An embodiment of the third aspect provides a signal processor having means for providing, from a signal to be processed, data values which represent the signal, and the said system for calculating the convolution of the data represents the signal with a filter function. The embodiment is for example a digital filter.

The third aspect of the present invention also provides an improved process for calculating a convolution in a computerized processor of the type in which coefficient values are representative of a filter function, data values are representative of a data function, and there is multiplying of the coefficient values with the data values to produce result values that are collectively representative of the convolution. The improvement comprises employing coefficient values that are based on a derivation of the filter function.

An embodiment of the third aspect provides from a signal to be processed, data values which represent the signal and the said process for calculating the convolution of the data values with the filter function. The process is for example a signal filtering process.

The invention also provides a computer program which, when run on an array of computers causes the array to implement the process of the first, second or third aspect of the invention. The array of computers may be on a single semiconductor die. The computer program may be on a carrier which may be a recording medium, or an electrical signal, or a memory device in a computer.

These and other objects and advantages of the present invention will become clear to those skilled in the art in view of the description of the best presently known mode of carrying out the invention and the industrial applicability of the preferred embodiment as described herein and as illustrated in the figures of the drawings.

BRIEF DESCRIPTION OF THE SEVERAL VIEWS OF THE DRAWING(S)

The purposes and advantages of the present invention will be apparent from the following detailed description in conjunction with the appended figures of drawings in which:

FIG. 1 is a diagrammatic view depicting the inventive convolution system being employed in an array of computer processors;
FIG. 2 (background art) is a diagrammatic view of the major internal features of one of the processors in FIG. 1, specifically of a core in a SEAforth-24A processor by IntellaSys Corporation of Cupertino, California that is used in many examples herein;
FIGS. 3a-c are partial views of FIG. 1 depicting inbound, outbound, and internal communications using the processors in FIG. 1, wherein FIG. 3a shows how data is passed between the input device and a first processor, and between the first processor and a second processor, FIG. 3b shows how data is passed between a second to last processor and a last processor, and between the last processor and the output device, and FIG. 3c shows how data is passed between two exemplary processors being used centrally in the array;
FIGS. 4a-f are block diagrams schematically depicting convolution calculation stages in an array of processors, such as that of FIG. 1;
FIGS. 5a-f are block diagrams schematically depicting convolution calculation stages based on a new algorithm, again presented in an array of processors such as that of FIG. 1.
FIGS. 6a-c are graphs depicting convolution performed using both of the approaches presented in FIGS. 4a-f and FIGS. 5a-f, wherein FIG. 6a shows a first trace representing the use of conventional convolution coefficients and a second trace representing the use of derivation convolution coefficients, FIG. 6b shows a first trace representing input data upon which convolution is performed and a second trace representing the use of derivation signal data, and FIG. 6c shows a single trace representing the results of the approaches discussed.
FIG. 7 is a listing of code suitable for use in a direct filter; and
FIGS. 8a-b are a listing of code suitable for use in a derivation filter, wherein FIG. 8a shows the code performing the functions that are conceptually similar to those in FIG. 7 and FIG. 8b shows additional code used by the derivation-based algorithm.

In the various figures of the drawings, like references are used to denote like or similar elements or steps.

DETAILED DESCRIPTION OF THE INVENTION

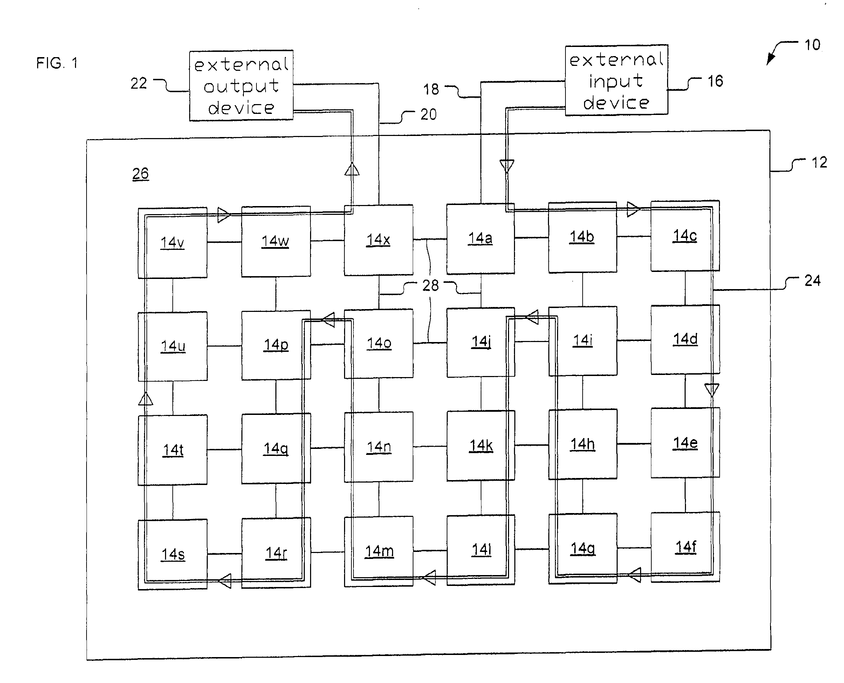

A preferred embodiment of the present invention is a system for convolution calculation performed with multiple computer processors. As illustrated in the various drawings herein, and particularly in the view of FIG. 1, preferred embodiments of the invention are depicted by the general reference character 10.
Briefly, the invention is an improved convolution system 10 for numerically approximating the solution to a convolution of a data function with a filtering function. Performing convolution calculations using numerical techniques inherently tends to involve large numbers of multiplication and addition operations. The present invention permits substantially reducing the overall time needed to perform such calculations in two particular manners. First, the invention permits completing large portions of the necessary calculations in parallel, rather than serially. Second, the invention permits employing a new class of algorithms which uses filter values and data values that can be expressed with fewer data bits, and thus which can be performed faster in view of the inherent limitations in processors.
FIG. 1 is a diagrammatic view depicting the inventive convolution system 10 being employed in an array 12 of computer processors 14. To focus on the convolution system 10 itself, external elements that support the array 12 have been omitted or represented generically. Those skilled in the art will appreciate, however, that such elements will be present in actual operating embodiments and that they typically can be conventional in nature. For instance, FIG. 1 omits all details related to powering the array 12 and includes generic forms of an external input device 16, an input bus 18, an output bus 20, and an external output device 22. For the sake of simplifying presentation, general computational initialization and termination matters are also not initially discussed, and program instructions and convolution coefficient values are treated as being already loaded into the processors 14. The input device 16 here is considered only with respect to providing the input data values upon which convolution will be performed and the output device 22 here is considered only with respect to receiving the output data values upon which convolution will have been performed. The input data values are samples of a signal to be processed, e.g. filtered. The output data values are processed, e.g.

filtered, signal samples.

Starting at the input device 16 and ending at the output device 22, FIG. 1 also stylistically shows a flow path 24. It should be appreciated, however, that other arrangements than this are easily possible. For instance, other starting and stopping positions are possible, different paths than the depicted flow path 24 are also possible (and are even likely in alternate embodiments), and a single combined I/O device (not shown) may be employed instead, say, one having input and output channels communicating with the array 12.

The inventor's presently preferred hardware platform for the convolution system 10, is to have the array 12 of processors 14 in a single semiconductor die 26, such as the SEAforth-24A or the SEAforth-40A devices, by IntellaSys Corporation of Cupertino, California. The SEAforth-24A is used herein in most examples (and the processors 14 in these examples can properly be termed "cores" or "nodes"). To further facilitate this discussion, the members of the collective set of processors 14 are individually referenced as processors 14a-x, as shown, and each has busses 28 that permit intercommunication with other processors 14 that are present.

Although each processor 14 shown in FIG. 1 has busses 28 interconnecting it to all of its adjacent processors 14, from the route of the flow path 24 it can be seen that not all of the busses 28 are necessarily used. In fact, the embodiment of the convolution system 10 shown here could alternately be embodied in a single dimensional array of serially communicating processors (which we term a "pipeline" of processors).

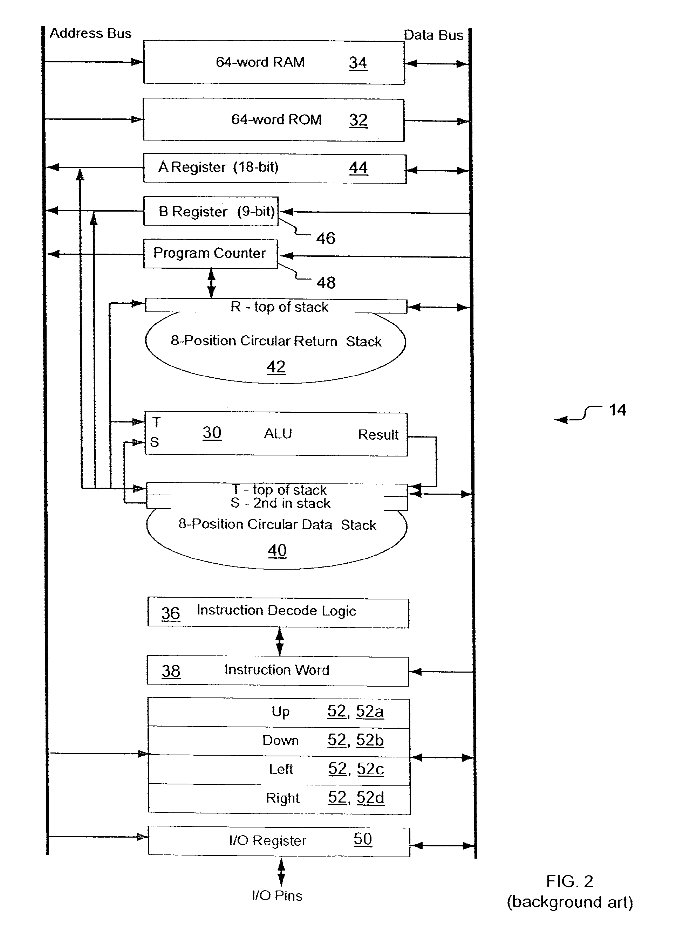

FIG. 2 (background art) is a diagrammatic view of the major internal features of one of the processors 14 in FIG. 1, i.e., of a SEAforth-24A processor core. Each of the processors 14a-x is generally an independently functioning computer, including an arithmetic logic unit (ALU 30), a quantity of read only memory (ROM 32), a quantity of random access memory (RAM 34), an instruction decode logic section 36, an instruction area 38, a data stack 40, and a return stack 42. Also included are an 18-bit "A" register (A-register 44), a 9-bit "B" register (B-register 46), a 9-bit program counter register (P-register 48), and an 18-bit I/O control and status register (IOCS-register 50). Further included are four communications ports (collectively ports 52, individually ports 52a-d). Except for edge and corner node cases, the ports 52 each connect to a respective bus 28 (and have 18 data lines, a read line, and a write line - not shown individually).

The nodes in the SEAforth-24A device handle communications and processing in particularly elegant and efficient manners, both asynchronously, making this device highly suitable for use with embodiments of the inventive convolution system 10. It should be kept in mind, however, that using this particular device, or even hardware that approaches its capabilities is not a requirement. Also, one may need to guard against misconceptions about how data is actually communicated between the processors 14 in the array 12. For example, either "push" or "pull" metaphors can be employed when thinking about inter-device communications, but one should remain mindful that communications is actually a cooperative act between devices.

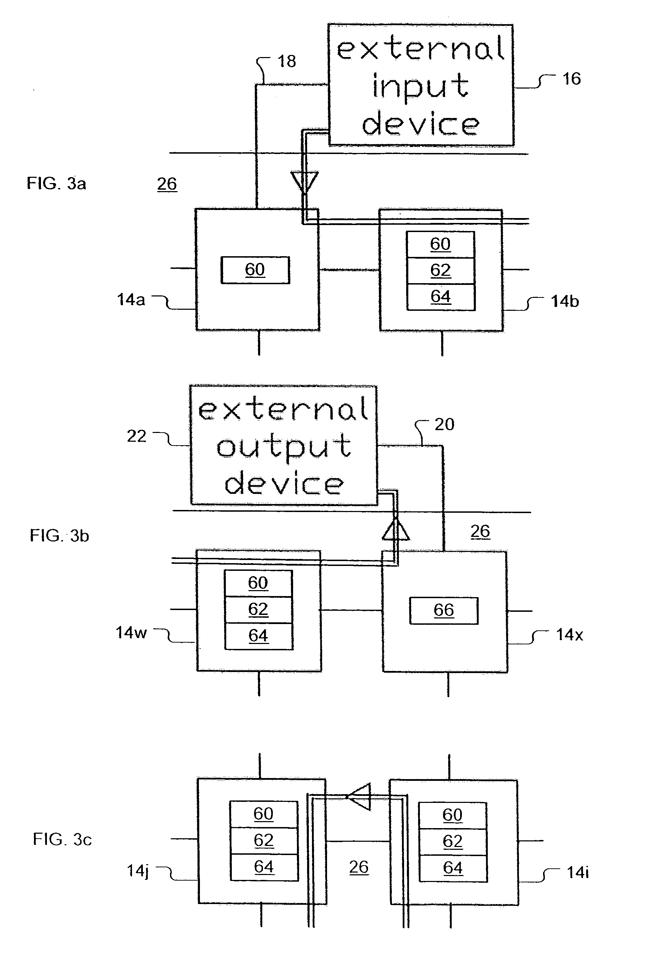

FIGS. 3a-c are partial views of FIG. 1 depicting inbound, outbound, and internal communications using the processors 14. FIG. 3a shows how data is passed between the input device 16 and processor 14a, and between processor 14a and processor 14b. FIG. 3b shows how data is passed between processor 14w and processor 14x, and between processor 14x and the output device 22. And FIG. 3c shows how data is passed between processor 14i and processor 14j.

Each processor 14 in FIGS. 3a-c is represented as having generic key information holding elements. The SEAforth-24A device features RAM, ROM, registers, and ports which can all be used in programmatically performing calculations. Here that particularly means that the generic information holding elements, which are about to be discussed, can be any of RAM, ROM, registers, and ports. In the case of processor 14a, a signal data element 60 is the important information holding element. In the cases of processors 14b-w, one each of the signal data elements 60, the integral kernel filter elements 62, and the calculated elements 64 are the respective important information holding elements. And in the case of processor 14x, a result element 66 is the important information holding element.

Proceeding now with FIG. 3a, this shows how data can be entered into the array 12. In this exemplary embodiment of the convolution system 10, processor 14a is dedicated to receiving data from the input device 16 and providing it to processor 14b. As such, processor 14a can receive and store data words from the input device 16 and then use its signal data element 60 to provide instances of these data words to processor 14b, subject only to limitations by the capacity of its RAM 34 and whether it has been suitably programmed.

Both communications and processing in the SEAforth-24A device are asynchronous so, once the processor 14a makes data available to processor 14b, the processing of the task at hand can, conceptually, "flow" through the rest of the array 12.

FIG. 3b shows how data can be extracted from the array 12. The processor 14x here is dedicated to receiving data from processor 14w and providing it to the output device 22. As such, processor 14x receives and stores data words from processor 14w, and then uses its result element 66 to provide data words to the output device 22, again all subject only to limitations by the capacity of its RAM 34 and whether it has been suitably programmed.

FIG. 3c shows how the contents of the signal data elements 60 and the calculated elements 64 generally flow between the processors 14b-w, and also how the sum can be stored in each processor 14 as an accumulation and then passed all at once in the course of a convolution calculation. As described in detail presently, each of the processors 14b-w here can be performing an operation contributing to the overall calculation. In the case of processor 14b, this operation uses a new input data value (in its signal data element 60) and a pre-stored convolution coefficient value (in its integral kernel filter element 62). In this particular example processor 14b does not need a calculated element 64, since there is nothing "partial" yet from an earlier calculation stage. For program simplicity, however, processor 14b can have a calculated element 64 loaded with zero. Also, for applications where multiple convolution coefficients per node are processed (discussed presently), processor 14b may then have and use a calculated element 64.

Continuing, in the cases of processor 14c-w, each performs an operation contributing to the overall convolution calculation by using a pre-stored convolution coefficient value, an input data value which has come from its respective preceding processor 14 along the flow path 24, and an intermediate value which is also from the preceding processor 14. The convolution coefficient value is held in a respective integral kernel filter element 62, the input data value is held temporarily in a respective signal data element 60, and the intermediate value is held temporarily in a respective calculated element 64.

In combination, FIG. 2 and FIGS. 3a-c can be used to see more generally how the ports and registers of the processors 14a-x in a SEAforth-24A device can be used as just described. For example, processor 14a uses its port 52d to pass an input data value rightward to processor 14b, which can put it into it's data stack 40. To actually accomplish this, processor 14b will read the input data value that has arrived at it's port 52c and puts it onto its data stack 40. Then processor 14b performs an operation contributing to the convolution, using the input data value now in it's data stack 40 and the convolution coefficient value already in it's data stack 40, and then processor 14b puts the intermediate data value from this at its port 52d.

Similar operations can then occur along the flow path 24 in the processors 14b-w. Although the nodes in the SEAforth-24A device operate asynchronously, the operations in the processors 14b-w here can all conceptually be viewed as taking place in parallel. Accordingly, essentially contemporaneously with what has just been described for processor 14b, similar operations can be taking place in processors 14i and 14j, for example, only these will be using respective convolution coefficient values, processing intermediate data values, and using their ports 52 along the flow path 24. Also essentially contemporaneously, processor 14w will make available at its port 52c an output data value for processor 14x to handle as described above. Again it should be noted, however, that the RAM, ROM, registers, and ports can all be used in programmatically in the SEAforth-24A device and this preceding example is merely one of many ways the processors 14 can be programmed to achieve the same results.

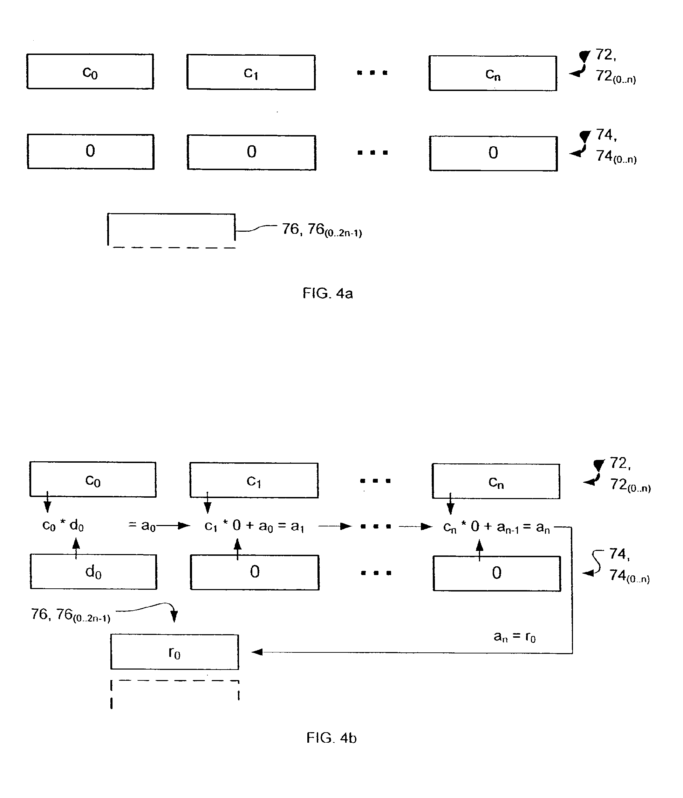

FIGS. 4a-f are block diagrams schematically depicting convolution calculation stages in an array 12 of processors 14 such as that of FIG. 1. Generally, the stages here entail:

(1) multiplying data sample values and convolution coefficient values in parallel;
(2) calculating the sum of the multiplication products from stage (1);
(3) shifting the data sample values through the array 12 (i.e., through the pipeline), receiving a next data sample value into the first node and dropping the data sample value from the last node; and
(4) repeating as needed (i.e., as described now in more detail).

Since the SEAforth-24A device features RAM, ROM, registers, and ports which all can be used in programmatically performed calculations, and since the inventive convolution system 10 can be used with other devices having lesser, greater, or yet other capabilities and structures, the data storage elements in FIGS. 4a-f are here generically termed "bins." To simplify the following discussion, the examples here use equal numbers (specifically 22 each) of convolution coefficient values, sample data values, and processors 14 being employed in the actual convolution calculation. These quantities may be uncommon in many "real world" applications, so considerations for alternate cases are discussed presently and, in any case, to use other quantities should generally be straightforward for those skilled in the art once the following is fully appreciated.

FIG. 4a shows a stage at which formal calculation is ready to commence. Convolution coefficient values ($c_0$ ... $c_n$; n+1 values total, wherein n=21 in the SEAforth-24A device in FIGS. 1 and 3a-c) have been loaded into bins (referred to as c-bins 72 collectively and c-bins $72_{(0..n)}$ specifically), zeros have been loaded into other bins (d-bins 74 collectively and d-bins $74_{(0..n)}$ specifically), and other bins (r-bins 76 collectively and r-bins $76_{(0..2n-1)}$ specifically) have contents which are initially unimportant. In FIGS. 4a-f and the following discussion, indexing begins at zero and "c" stands for "coefficient," "d" stands for "data," "a" is an "accumulated" intermediate value, and "r" stands for "result."

FIG. 4b shows a next stage at which a first data sample value (do) has been received into d-bin $74_{(0)}$. Calculation proceeds as shown, essentially contemporaneously and in parallel throughout the length of the pipeline, with a first result value ($r_0$) being stored in r-bin $76_{(0)}$.

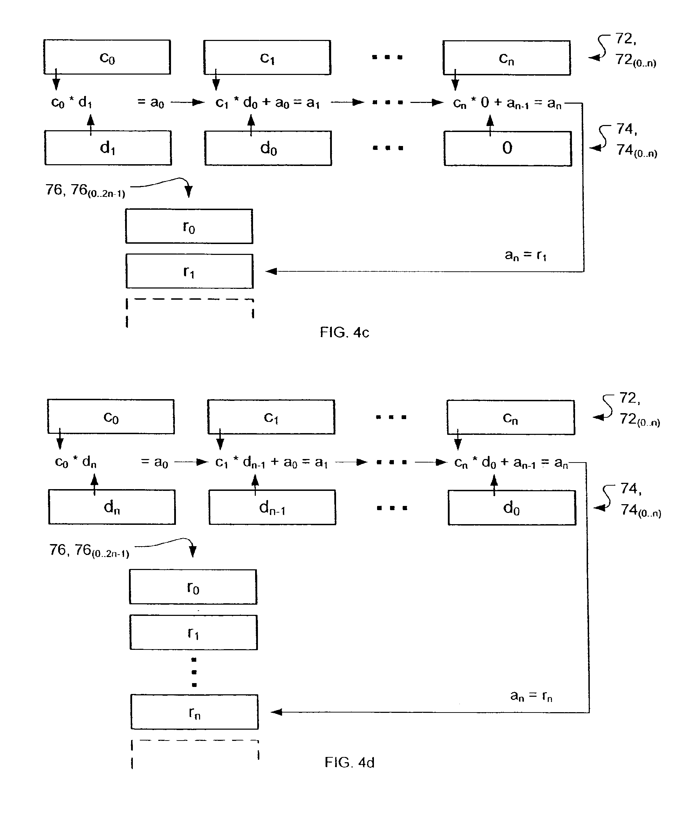

FIG. 4c shows a next stage at which the prior data sample value (do) has been moved to d-bin $74_{(1)}$ and a second data sample value ($d_1$) has been received into d-bin $74_{(0)}$. Calculation again proceeds as shown, essentially contemporaneously and in parallel throughout the length of the pipeline, with a second result value ($r_1$) now being stored in r-bin $76_{(1)}$.

Between FIG. 4c and FIG. 4d are $n$-2 stages that are conceptually much like the stage just described.

FIG. 4d shows a stage at which the last data sample value $(d_n)$ has been received into d-bin $74_{(0)}$. Again calculation proceeds as shown, with a result value $(r_n)$ now being stored in the r-bin $76_{(n)}$.

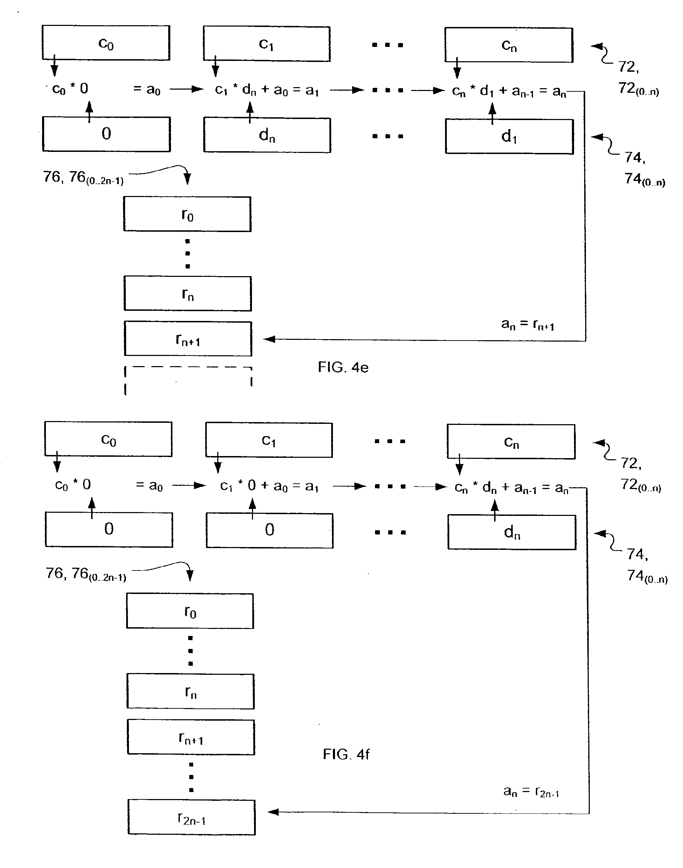

FIG. 4e shows a next stage. Having now partially processed all of the $n+1$ data sample values $(d_0 \ldots d_n)$, the last data sample value $(d_n)$ has been moved into d-bin $74_{(1)}$ and a zero value is put into d-bin $74_{(0)}$. Calculation proceeds and a result value $(r_{n+1})$ is stored in r-bin $76_{(n+1)}$.

Between FIG. 4e and FIG. 4f are another *n-2* stages that are conceptually much like the stage just described.

FIG. 4f shows a stage at which the last data sample value $(d_n)$ is finally finishing being processed. After calculation here, an $(n+n-1)^{th}$ result value is stored in r-bin $76_{(2n-1)}$ and processing is complete. The r-bins $76_{(0..2n-1)}$ now hold the full result of the convolution calculation performed here based on the $n+1$ data sample values $(d_0 \ldots d_n)$ and the $n+1$ convolution coefficient values $(c_0 \ldots c_n)$.

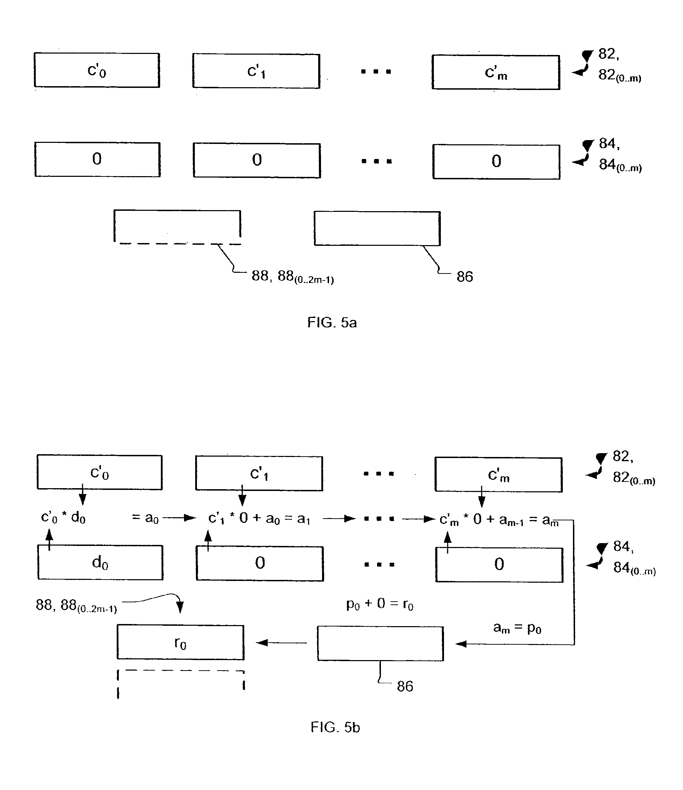

FIGS. 5a-f are block diagrams schematically depicting convolution calculation stages based on a new algorithm, again presented in an array 12 of processors 14 such as that of FIG. 1. Briefly, the new algorithm employs a derivation of the filtering function. To emphasize this, the convolution coefficient values used here are differently denoted, as $c'_0 \ldots c'_m$ (wherein m=21 in the SEAforth-24A device in FIGS. 1 and 3a-c; note, the reason for using when using a different reference for the index here is discussed presently).

FIG. 5a shows a stage at which formal calculation is ready to commence. The derivation convolution coefficient values $(c'_0 \ldots c'_m)$ have been loaded into bins (c'-bins 82 collectively and c'-bins $82_{(0..m)}$ specifically), zeros have been loaded into other bins (d-bins 84 collectively and d-bins $84_{(0..m)}$ specifically), and a single p-bin 86 and a set of result bins (r-bins 88 collectively and r-bins $88_{(0..2m-1)}$ specifically) have contents which are initially unimportant. Somewhat similar to the preceding example, indexing begins at zero and "c'" stands for derivation of a "coefficient," "d" again stands for "data," "a" is again an accumulated intermediate value, "p" stands for or "part" (as in "part" contributing to the result), and "r" stands for "result."

FIG. 5b shows a next stage at which a first data sample value (do) has been received into d-bin $84_{(0)}$. Calculation proceeds as shown, essentially contemporaneously and in parallel throughout the length of the pipeline, with a first part value $(p_0)$ being provided to the p-bin 86. However, unlike the variation using the conventional convolution algorithm shown in FIG. 4a-f, the "previous" part value here is added to the present part value, and this is then stored in r-bin $88_{(0)}$. Since there is nothing "previous" at this early stage, however, a zero is added to the first part value $(p_0)$ to calculate a first result value $(r_0)$ that is stored in r-bin $88_{(0)}$.

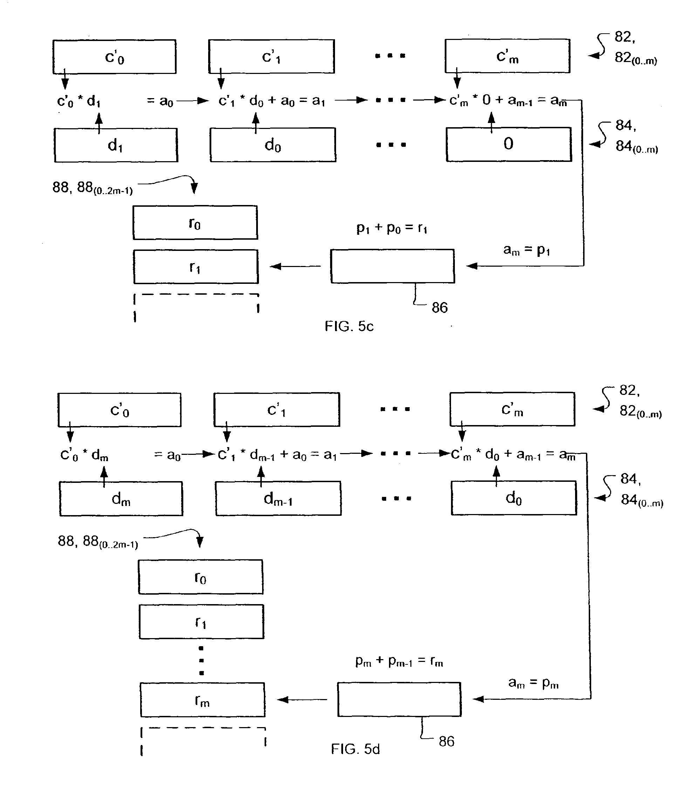

FIG. 5c shows a next stage at which the prior data sample value (do) has been moved to d-bin $84_{(1)}$ and a second data sample value $(d_1)$ has been received into d-bin $84_{(0)}$. Calculation again proceeds as shown, essentially contemporaneously and in parallel throughout the length of the pipeline, with a second part value $(p_1)$ now being provided to the p-bin 86. The previous part value $(p_0)$ is added to the present portion value $(p_1)$, and this is then stored as a second result value $(r_1)$ in r-bin $88_{(1)}$.

Between FIG. 5c and FIG. 5d are m-2 stages that are conceptually much like that just described.

FIG. 5d shows a stage at which the last data sample value $(d_m)$ has been received into d-bin $84_{(0)}$. Yet again, calculation proceeds as shown, with an $m^{th}$ result value $(r_m)$ now being stored in r-bin $88_{(m)}$.

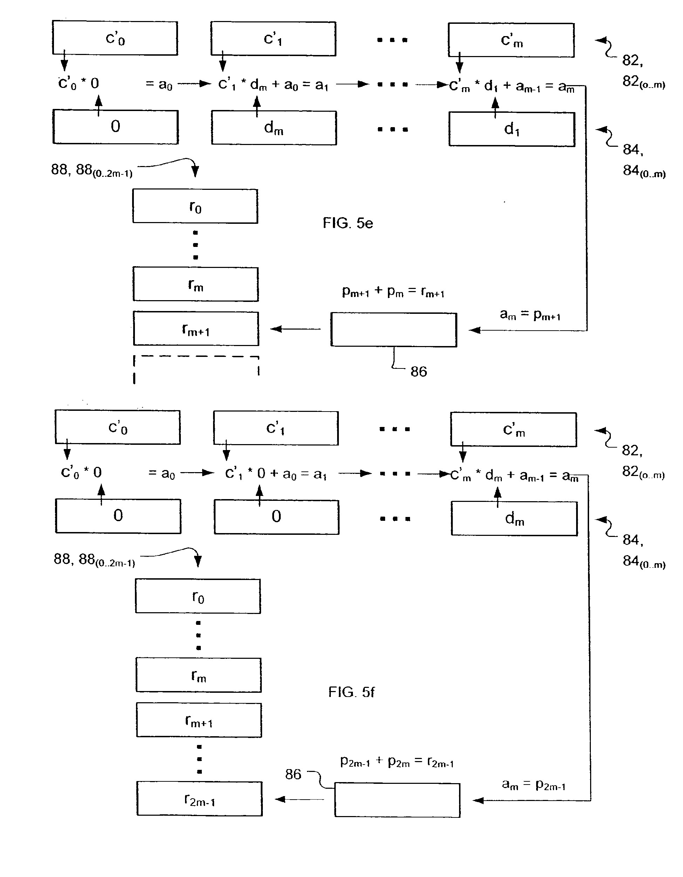

FIG. 5e shows a next stage. Having now partially processed all of the $m+1$ data sample values $(d_0 \ldots d_m)$, the last data sample value $(d_m)$ has been moved to d-bin $84_{(1)}$ and a zero value is put into d-bin $84_{(0)}$. Calculation proceeds and a result value $(r_{m+1})$ is stored in r-bin $88_{(m+1)}$.

Between FIG. 5e and FIG. 5f are another *m-2* stages that are conceptually much like that just described.

FIG. 5f shows a stage at which the last data sample value $(d_m)$ is finally finishing being processed. After calculation here an $(m+m-1)^{th}$ result value $(r_{2m-1})$ is stored in r-bin $88_{(2m-1)}$ and processing is complete. The r-bins $88_{(0..2m-1)}$ now hold the full result of the convolution calculation performed here based on the $m+1$ data sample values $(d_0 \ldots d_m)$ and the $m+1$ derivation convolution coefficient values $(c'_0 \ldots c'_m)$.

Summarizing, from the above it should now be clear that the inventive convolution system 10 permits completing substantial portions of the necessary calculations in parallel, rather than serially. For instance, in the simplified examples just described, 22 of the processors 14 are performing calculations in parallel. Note, all 24 of the processors 14 in a SEAforth-24A device could have also been employed, but this would not be as fast because processor 14a and processor 14x would then have to do double-duty to cover both calculation and I/O.

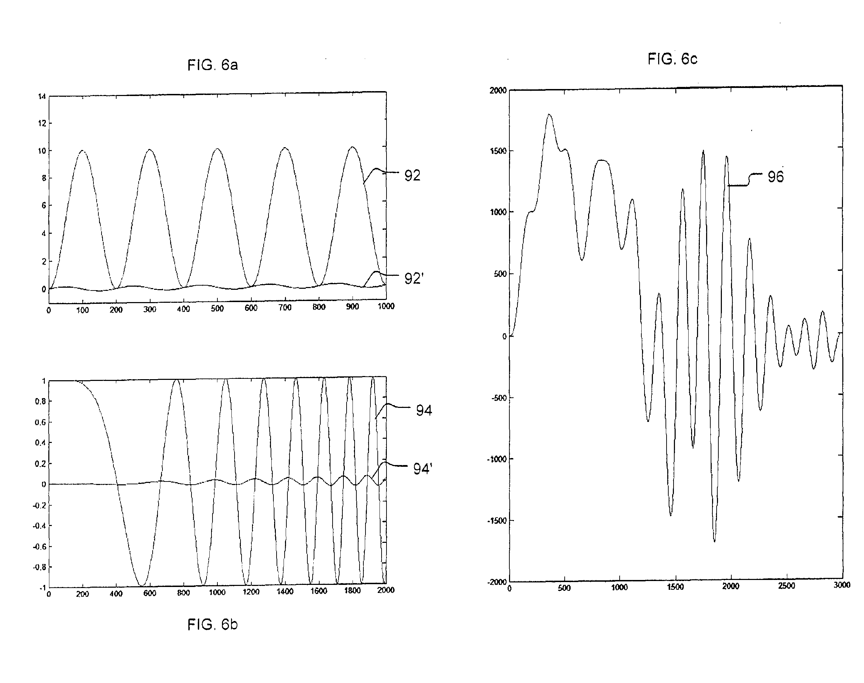

As noted at the beginning of this section, the inventive convolution system 10 also permits employing a new class of algorithms, and aspects of this are now discussed. FIGS. 6a-c are graphs depicting convolution performed using both of the approaches presented above. As such, these figures provide a conceptual overview of what has been presented in FIGS. 4a-f and FIGS. 5a-f.

FIG. 6a shows a first trace 92 representing the use of conventional convolution coefficients and a second trace 92' representing the use of derivation convolution coefficients, that is, ones usable by the new class of algorithms and which may be used in the present invention. FIG. 6b shows a single trace 94 representing input data upon which convolution is performed using both of the approaches so far presented (the other trace 94' here is discussed presently). FIG. 6c shows a single trace 96 representing the results of both of the so far discussed approaches. In the particular example shown in FIGS. 6a-c, the trace 92 is represented by the equation:

$$(7) \quad u(t) = 10 \cos^2\left(\frac{\pi t}{2}\right),$$

The trace 92' is represented by u'(t). The trace 94 is represented by the equation:

$$(8) \quad v(t) = 0.8 \cos\left(\frac{i\pi t}{q}\right),$$

And the trace 94' is represented by $v'(t)$. Here t is defined on the interval from -1 to 1 with step size 0.01, $i$ ranges from 1 to q by step size of 1, and q is the number of data points (2000 in this example) that pass through the filter function. Collectively, FIGS. 6a-c show how the very same result can be achieved using either of the approaches so far discussed, that result being shown as trace 96 here.

Yet other approaches are possible using the new class of algorithms. For example, with reference again to FIGS. 6a-c, a derivation data function, say, that represented as trace 94', and a conventional filter function, say, that represented as trace 92, can be used and the result in trace 96 will again be the same. There is some implication in the literature that others are considering this approach, albeit implemented not in the novel manners disclosed herein. The use of function derivations can also be taken further logically. For example, using derivations of both the data and the filter functions is theoretically possible. Yet further, using higher order derivations of either or both the data and the filter functions is also theoretically possible. As a practical matter these approaches may have limited real world utility, but they are nonetheless encompassed by the spirit of the present invention. In FIGS. 6a-c the derivations of both the data and filter functions approach is represented by trace 92' and trace 94', and having the result still being that in trace 96.

Some important considerations when using derivation, in any of the approaches, follow from the effort required to obtain a function derivation. In convolution calculations the number of data sample values used will usually exceed the number of coefficient values being used. Accordingly, it follows that less effort will typically be needed to obtain a derivation of the filter function than will be needed to obtain a derivation of the data function. Of course, particular situations may exist where little or no extra effort is needed to obtain the derivation of a data function, but this will likely be rare. Furthermore, since the filter coefficient values will frequently be the same when performing multiple convolution calculations on what will typically be different data sample values, the effort put into obtaining the filter coefficient values is a reusable or "amortized" effort. Indeed, in many applications this effort will be expended in design and the filter values can be entered as program constants (e.g., even stored in the ROM 32 of a device like the SEAforth-24A).

Continuing again with FIG. 6a-c, it can be seen that the trace 92 and trace 94 have large amplitude ranges while trace 92' and trace 94' have a markedly lesser amplitude ranges. As a practical matter, this means that the values in trace 92' and trace 94' can be expressed using fewer bits. The importance of this can be grasped when one considers the nature of the available tools, that is, the inherent limitations of digital processors. Although the SEAforth 24A device is actually quite outstanding over many other suitable candidates, we can and do continue using it here to illustrate points about how the inventive convolution system 10 can help overcome some of the inherent limitations in modem digital processors, generally.

For instance, the convolution filter values in trace 92 might have to be expressed using 18-bit values, whereas the values used for the inventive approach in trace 92' might be expressed using 9-bit or even fewer-bit values. Similarly, one can consider that the data sample values used in trace 94 might have to be expressed using 18-bit values, whereas the values used for the inventive approach in trace 94' might be expressed using 9-bit or even fewer-bit values. It has been the present inventor's observation that using all 9-bit values can provide roughly a four fold (4X) speed increase in the inventive convolution system 10.

Digital processors are inherently limited with respect to the sizes of the values that they can directly perform operations on. For example, the 4004 processor introduced by Intel Corporation in 1971 handled 4-bit values and the processors in most current-generation personal computers directly handle 32- or 64-bit values. Also, multiplication of large values is generally one of the slowest operations available in most processors today. It has been the present inventor's observation that multiplication operations can account for 60-90% of the execution time of a convolution algorithm.

The SEAforth-24A device is no exception to these general principles of digital processors. It employs the Forth language and relies on numeric values being represented with 18 bits for unsigned values (or 17 bits for signed values), or as being represented with 9 bits for unsigned values (or 8 bits for signed values). If a value requires 10 bits, for example, it effectively therefore must be treated the same as if it requires 18 bits. With reference briefly back to FIG. 2 it can be seen again that each processor 14 in the SEAforth-24A device has one 18-bit A-register 44, one 9-bit B-register 46, 18-bit wide words in ROM 32 and RAM 34, and 18-bit wide ports 52.

The equivalent here to multiplying two 18-bit values in the Forth language in a processor 14 requires the following sequence of thirty six operational codes (where "." Represents the nop or no-operation instruction and "+*" represents the plus-star or bit-wise multiply instruction):

$$(9) \quad .+* .+* .+* .+* .+* .+* .+* .+* .+* .+* .+* .+* .+* .+* .+* .+* .+* .+*$$

In contrast, the equivalent here to multiplying one 18-bit value and one 9-bit value in the Forth language in a processor 14 requires the following sequence of eighteen operational codes:

$$(10) \quad .+* .+* .+* .+* .+* .+* .+* .+* .+*$$

And the equivalent here to multiplying two 9-bit values in the Forth language in a processor 14 requires the following sequence of nine operational codes:

$$(11) \quad +* +* + *+ *+ *+ *+ *+ * +*$$

Clearly, from the standpoint of computational burden and achievable speed, calculating equation (9) is the least preferred task and calculating equation (11) is the most preferred task. These can be spoken of as running at 1x, 2x, and 4x speeds, respectively.

A more rigorous "proof" for the conceptual basis of the above is now presented. The new class of algorithms employable by inventive convolution system 10 uses a derivative representation instead of the direct representation of the integral kernel (see e.g., equation (1) and the Background Art section, generally). The following is essentially a restatement of equation (5):

$$(12) \quad r(t) = \int_0^t f(t-\tau)g(\tau)d\tau = \lim_{\Delta \to 0} \sum_{k=0}^t f(c_{t-k})g(c_k)\Delta\tau ,$$

where $f(t-\tau)$ represents the integral kernel. However, suppose instead that the integral kernel is represented by $f'(t-\tau)$. This results in the following:

$$(13) \quad r'(t) = \int_0^t f'(t-\tau)g(\tau)d\tau = \lim_{\Delta \to 0} \sum_{k=0}^t f'(c_{t-k})g(c_k)\Delta\tau .$$

Now assuming that the integral kernel is a particular low pass filter or can be represented by a low pass filter, then the following approximation is reasonable:

$$(14) \quad f'(c_{t-k}) = f(c_{t-k}) - f(c_{t-k-\Delta\tau k}) ,$$

and it follows that:

$$(15) \quad \lim_{\Delta\tau \to 0} \sum_{k=0}^{t} \left[ f(c_{t-k}) - f(c_{t-k-\Delta\tau}) \right] g(c_k) \Delta\tau =$$

$$\lim_{\Delta\tau \to 0} \sum_{k=0}^{t} f(c_{t-k}) g(c_k) \Delta\tau - \lim_{\Delta\tau \to 0} \sum_{k=0}^{t} f(c_{t-k-\Delta\tau}) g(c_k) \Delta\tau .$$

At this point it is easy to see that the first sum to the right of the equals sign in equation (14) is simply *r(t)*. What is not so obvious is that the second term to the right of the equals sign is simply just the previous convolution value from just one time step $\Delta\tau$ ago, and that this can be represented in the following way:

$$(16) \quad \lim_{\Delta\tau \to 0} \sum_{k=0}^{t} f(c_{t-k-\Delta\tau}) g(c_k) \Delta\tau = r(t - \Delta\tau) .$$

Hence the following relationship holds between convolution utilizing direct integral kernel relationship and convolution utilizing derivative of direct integral kernel relationship:

$$(17) \quad r'(t) = r(t) - r(t - \Delta\tau) \rightarrow r(t) = r'(t) + r(t - \Delta\tau) .$$

An important observation here is to realize that convolution utilizing the direct representation is exactly the same as the addition of the convolution utilizing the derivation of the kernel and the previously calculated convolution. This is the same as saying the new sum equals the old sum plus whatever has just been calculated.

Applying this in the context of the new class of algorithms that are usable in the inventive convolution system 10, the direct filter coefficient values ($c_0 \ldots c_n$) can be used to compute the derivation coefficient values ($c'_0 \ldots c'_{n+1}$) in the following way: $c'_0 = c_0 - 0$; $c'_1 = c_1 - c_0$; $c'_2 = c_2 - c_1$; ...; $c'_n = c_n - _{cn-1}$; and $c'_{n+1} = 0 - c_n$. However, if the value of $c_0$ is non-zero, then we simply have $c'_0 = c_0 - 0 = c_0$. Similarly, if $c_0$ is zero, then we simply have $c'_0 = 0 - 0 = 0$ and there is no reason to even associate a derivation filter value with the value zero, because it will not contribute towards the accumulated intermediate value ($a_0$). This reasoning can be extended to any direct filter value or to any derivation of a direct filter value that is zero, because it is not necessary to associate a filter coefficient value with a particular node if it will not contribute to the accumulated intermediate value calculated at that node. Nonetheless, other than for the first node, the partial sum at each node still must be accounted for.

Turning now to why the index n was used in FIGS. 4a-f and the index m was used in FIGS. 4a-f, this was done to emphasize one key distinction between using the direct-based algorithm and the derivation-based algorithm. As can be seen in the last paragraph, where n direct filter coefficient values ($c_0 \ldots c_n$) could be used, *n+1* derivation coefficient values ($c'_0 \ldots c'_{n+1}$) are needed. Thus, for example, if one were to apply 21 processors to an application using the direct-based algorithm, one would need 22 processors for the same application using the derivation-based algorithm. Alternately, if one were to apply 22 processors to an application using the direct-based algorithm, one would need 23 processors for the same application using the derivation-based algorithm. In the case of the SEAforth-24A device in FIGS. 1 and 3a-c, this would require leaving one processor unused or combining the I/O functions into one processor so that 23 processors could be employed by the derivation-based algorithm. This may present a slight issue when using a 24-processor device (e.g., the SEAforth-24A), but it is much less an issue when using a 40-processor device (e.g., the SEAforth-40A), and it rapidly becomes trivial when 80-, 96-, 128-, etc. devices are employed.

Note also, the discussion herein was simplified by using equal numbers of convolution coefficient values and sample data values. If one had 22 sample data values to process when using the direct-based algorithm they would need 23 sample data values to process when using the derivation-based algorithm. Of course, 22 actual data values could be used and "padded" with 23rd value of zero. More typically, however, this will be a non-issue because a large quantity, potentially approaching an infinite quantity, of sample data values will be used in most real-world applications.

In summary, a benefit of utilizing a derivation representation instead of direct representation is that the values required to represent the amplitude of a derivation are often much smaller in magnitude than the values used to represent the amplitude of a direct filter. What transpires in terms of the SEAforth-24A device, again using it as an example, is that instead of needing a full 18-bit data word to represent an amplitude value it will often be the case that a 9-bit data word is sufficient. There are two requirements that allow 9-bit representation to be considered sufficient. The first is that the coefficient values be represented in 9 bits unsigned (or 8 bits signed). The second condition is that the difference between successive direct filter coefficient values is represented by 9 bits unsigned (or 8 bits signed). In the case of a typical low pass filter, such as that used in the example presented in FIGS. 6a-c, the derivation value would have to be represented by only 8 bits because the most significant bit is left as the sign bit. As a general rule, if the values in question are unsigned or can be treated as unsigned and then if the difference between successive direct coefficient values is less than 512 units, the derivation approximation is an appropriate method. Otherwise, the difference between successive direct coefficient values must be less than 256 units.

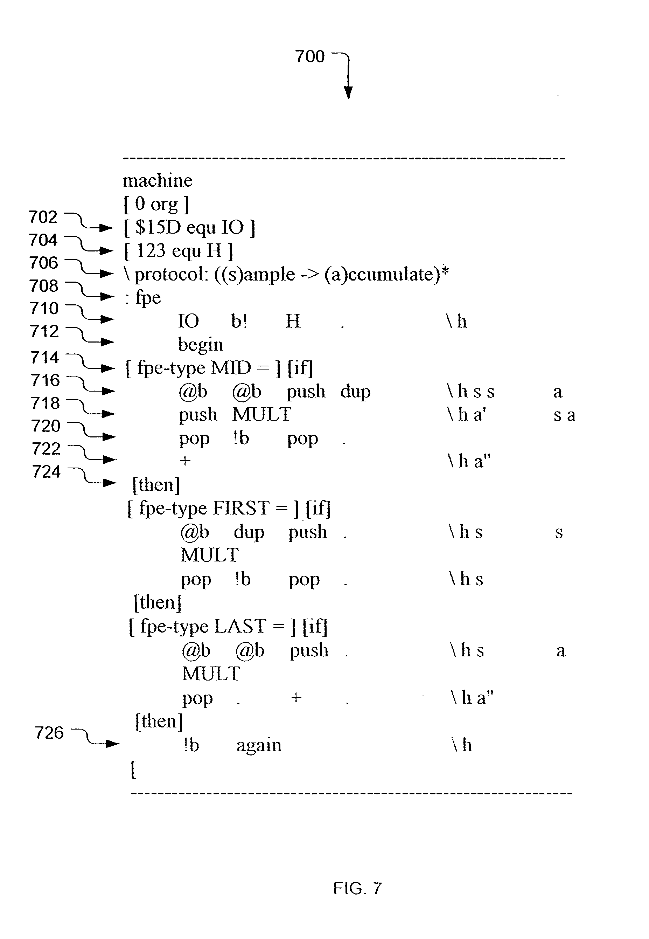

FIG. 7 is a code listing of an exemplary direct filter 700. The programming language used here is Forth and the target hardware processor 14 is a SEAforth 24A device.

An item 702 is a compiler instruction equating "IO" with the IOCS-register 50. This will specify where data is both read from and written to. Note, the IOCS-register 50 in the SEAforth 24A device can concurrently specify reading from and writing to different ports 52. To avoid confusion, those familiar with less sophisticated devices should keep this in mind when reading the following.

An item 704 is a compiler instruction equating "H" with a coefficient value. Here "123" is simply a value being used for the sake of example. This will be what is in the c-bin 72 for this processor 14.

An item 706 is a comment in the Forth language.

An item 708 is a location label in the Forth language.

An item 710 is a sequence of Forth instructions that initializes the processor 14 for the convolution calculation to follow. Specifically, IO is loaded into the top of the data stack; then popped from there into the B-register 46 so that it points to the IOCS-register 50; then H is loaded into the top of the data stack; and a nop pads the 18-bit instruction word used here to contain this instruction sequence.

An item 712 specifies the beginning of a loop within which three cases are dealt with by conditional compilation. This programs the processor 14 depending upon whether is to be the first (processor 14b), a middle (any of processors 14c-v), or the last (processor 14w) in the pipeline. See also, FIGS. 3a-c.

An item 714 here specifies the start of compilation of instructions for the most typical case, the one where the subject processor 14 is one of processors 14c-v.

[N.b., the right-side comments on the instruction words in FIGS. 7-8 use a 2-column scheme representing the data stack and the return stack if relevant, wherein the right-ward element is the top-most in the respective stack. The parentheticals in the following discussion show this "translated" into a before -- after and left-ward element is top-most scheme that is encountered in many Forth textbooks. In this manner both schemes are provided to help facilitate understanding of the present examples.]

An item 716 is another sequence of Forth instructions. Specifically, a data sample value (s) is read from where the B-register 46 points to and is pushed onto the data stack (h -- s h); then an accumulation value (a) is also read and pushed onto the data stack (s h -- a s h); then the top element on the data stack is popped and pushed onto the top of the return stack (D: a s h -- s h R: -- a); then the top element on the data stack is replicated and pushed onto the data stack (D: s h -- s s h R: a -- a).

An item 718 follows, where the top element on the data stack is popped and pushed onto the top of the return stack (D: s s h -- s h R: a -- s a); then a large multiply ("MULT," a definition provided in the BIOS of the SEAforth 24A device) is performed. The top two elements of the data stack are used here as a multiplier and a multiplicand, and the top element is replaced with the result (a') while the multiplicand is left as is as the second element in the data stack (D: s h -- a' h R: s a -- s a).

An item 720 follows, where the top element on the return stack is popped off and pushed onto the data stack (D: a' h -- s a' h R: s a -- a); the top element of the data stack is popped off and written to where the B-register 46 points to (D: s a' h -- a' h R: a -- a); the top element of the return stack is popped off and pushed onto the data stack (D: a' h -- a a' h R: a --); and a nop pads the 18-bit instruction word used.

An item 722 follows, where the top two elements of the data stack are added together, the top is replaced with the new accumulated sum (a") and the second is replaced with the next lower element (D: a a' h -- a" h R: --).

An item 724 follows, ending the conditional compilation of the code for the case here where the subject processor 14 is one of processors 14c-v.

Understanding the other two conditional compilation options shown in FIG. 7 should now be straightforward. The case for processor 14b is simpler, because there is no "prior" accumulate value to be read and added. And the case for processor 14v is also somewhat simpler, because the current data sample value does not need to be written to a "subsequent" processor.

Finally, an item 726 is an instruction sequence that is compiled for all of processors 14b-w, where the top element of the data stack is popped off and written to where the B-register 46 points (D: a" h -- h R: --); and the loop then returns to item 712.

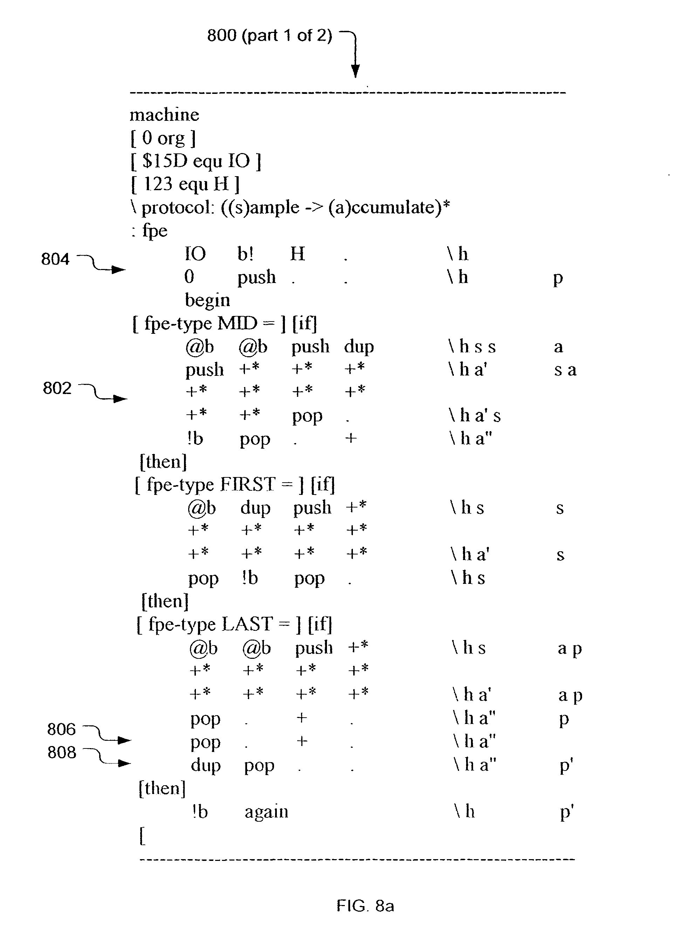

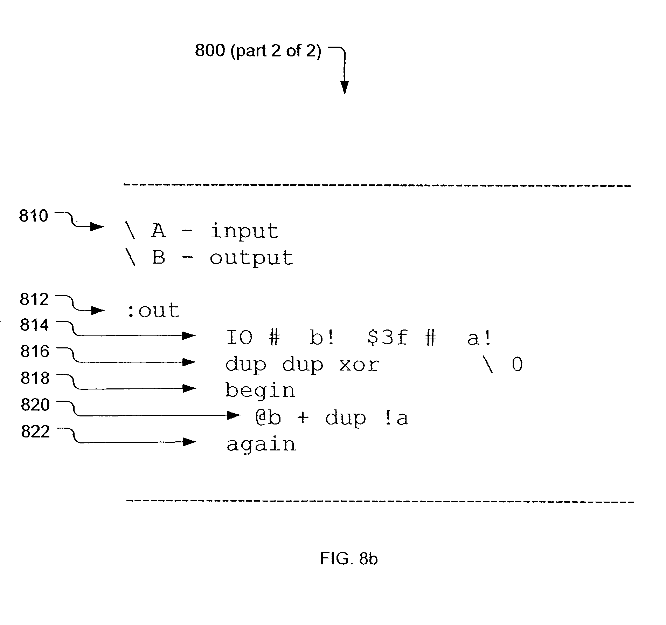

FIGS. 8a-b are a code listing of an exemplary derivation filter 800, wherein FIG. 8a shows the code performing the functions that are conceptually similar (other than 9-bit versus 18-bit calculations) to those in FIG. 7 and FIG. 8b shows additional code used by the derivation-based algorithm.

As can be seen in FIG. 8a, much of the code here is essentially the same as in the direct filter 700, discussed above. One exception, however, is an item 802, where nine plus star ("+*") operations are used to perform a small multiply (instead of a large multiply performed using the MULT definition).

An item 804 is a sequence of Forth instructions that initializes a portion value (p) in the return stack to zero. Specifically, here, a literal is placed on the data stack (D: h -- p h R: --); then pushed from there onto the top of the return stack (D: p h -- h R: -- p); and two nops are used to fill out the instruction word. [Note, this particular approach was chosen to facilitate conceptual comparison with the direct filter 700, and skilled programming artisans will readily appreciate that there are more efficient and elegant ways to handle this.]

An item 806 then handles the additional addition employing the current portion value (p). The current portion value (p) is popped of the return stack and pushed onto the data stack (D: a'' h -- p a'' h R: p --); a first nop buys time before the next instruction; the top two elements of the data stack are added together, wherein the top is replaced with the sum which is both the next portion value (p') as well as the accumulated sum (a"), and the second is replaced with the next lower element (D: p a" h -- p' h R: --); and a second nop pads the 18-bit instruction word.

An item 808 then retains the accumulated sum (a") in the return stack as a next portion value (p'). The accumulated sum (a") is replicated (D: a" h-- p' a" h R: --); the next portion value (p') is popped off of the data stack and pushed onto the return stack (D: a" h -- a" h R: -- p'); and two nops pad out the 18-bit instruction word.

Turning now to FIG. 8b, this shows additional code used for the "integrator" step when the derivation-based algorithm is employed. Note, in this particular example this code would be run in an additional processor 14.

An item 810 is a comment in the Forth language and an item 812 is a location label in the Forth language. This code could be conditionally compiled, by adding appropriate complier directives to the code in FIG. 8a, or it can be separately compiled.

An item 814 is a sequence of Forth instructions that, first, fetches the value of IO into the B-register 46 and, second, fetches the value $3F (a port address) into the A-register 44.

An item 816 is another sequence of Forth instructions. Specifically, one that zeros the data stack. The top element on the data stack is replicated and pushed onto the data stack, and then this is done again (it is irrelevant what that top element is). Then the two topmost elements are popped off of the data stack, XOR'ed, and the result (zero) pushed back onto the data stack.

An item 818 specifies the beginning of a loop.

An item 820 is another sequence of Forth instructions. Specifically, a value is read from where the B-register 46 points to and is pushed onto the data stack; then the top two elements on the data stack are added and replace the top element (and the second element is replaced with the next lower element); then the top element on the data stack is replicated and pushed onto the data stack; and then the top element is popped off of the data stack and written to where the A-register 44 points. The net result of this is that the sum is output while a copy is also kept (accumulated) for the next execution of the loop.

And an item 822 is where the loop then returns to item 818.

As can be seen, the derivation-based algorithm used by the present inventive convolution system 10 requires very little additional code.

While various embodiments have been described above, it should be understood that they have been presented by way of example only, and that the breadth and scope of the invention should not be limited by any of the above described exemplary embodiments, but should instead be defined only in accordance with the following claims and their equivalents.

## Claims

1. A system for calculating a convolution of a data function with a filter function, comprising:

an array of processors including a first and a last said processors, wherein said processors include:

a logic to multiply a coefficient value that is based on a derivation of the filter function and a data value that is representative of the data function to produce a current intermediate value;
in said processors other than said first processor, a logic to receive a prior intermediate value that is representative of a previously performed calculation in another of said processors and to add said prior intermediate value to said current intermediate value; and

in said processors other than said last processor, a logic to send said data value and said current intermediate value to another said processor; and

a logic to hold a prior intermediate value, if any, from said last processor as a prior partial value and to add said prior partial value to said current intermediate value from said last processor to produce a result value; and

wherein said array of processors receives a series of said data values and produces a series of said result values that collectively are representative of the convolution of the data function with the filter function.

2. The system of claim 1, wherein said processors perform processing in parallel.

3. The system of claim 1, wherein said processors perform processing asynchronously.

4. The system of claim 1, wherein said processors intercommunicate asynchronously.

5. The system of claim 1, 2, 3 or 4 wherein multiple of said processors occupy a single semiconductor die.

6. The system of claim 5, wherein all of said array of processors occupy said semiconductor die.

7. The system of any preceding claim, wherein said processors further each include a filter storage element to hold said coefficient value.

8. The system of any preceding claim, further comprising a logic to receive said data value into said first processor from outside of the system.

9. The system of any preceding claim, further comprising a logic to send said result value out of said last processor to outside of the system.

10. The system of any preceding claim, wherein said logic to hold said prior said intermediate value is in said last processor.

11. A process for calculating a result value in a convolution of a data function with a filter function, the process comprising:

(a) obtaining a sequence of coefficient values that are based on a derivation of the filter function;
(b) for a data value that is representative of the data function:

(i) for each said coefficient value, in a pipeline of computerized processors including a first and last said processors:

(A) multiplying said coefficient value and said data value to produce a current intermediate value;
(B) other than in said first processor, adding a prior intermediate value that is representative of a previously performed calculation in another of said processors to said current intermediate value; and
(C) other than in said last processor, sending said data value and said current intermediate value to a subsequent said processor; and

(ii) adding a prior partial value, if any, to said current intermediate value from said last processor to produce a result value, wherein said prior partial value is a previous intermediate value from said last processor; and
(iii) outputting the result value to a digital signal processor employing the process.

12. A process for calculating a convolution of a data function with a filter function, the process comprising:

(a) obtaining a sequence of coefficient values that are based on a derivation of the filter function;
(b) obtaining a sequence of data values that are representative of the data function;
(c) for each said data value:

(i) for each said coefficient value, in a pipeline of computerized processors including a first and last said processors:

(A) multiplying said coefficient value and said data value to produce a current intermediate value;

(B) other than in said first processor, adding a prior intermediate value that is representative of a previously performed calculation in another of said processors to said current intermediate value; and
(C) other than in said last processor, sending said data value and said current intermediate value to a subsequent said processor; and

(ii) adding a prior partial value, if any, to said current intermediate value from said last processor to produce a result value, wherein said prior partial value is a previous intermediate value from said last processor;

(d) accumulating said result values of said (c) as the convolution; and
(e) outputting the convolution to a digital signal processor employing the process.

13. The process of claim 12, wherein said (c)(i)(A) is performed concurrently for a plurality of said data values in a plurality of said processors.

14. The process of claim 12, wherein said (c)(i)(A) is performed concurrently for said sequence of coefficient values in a plurality of said processors..

15. A system for calculating a convolution in which:

at least one processor multiplies a coefficient value that is representative of a filter function with a data value that is representative of a data function;
wherein:

said coefficient value being based on a derivation of the filter function.

16. The system of claim 15, further comprising a plurality of said processors that multiply multiple said coefficient values with multiple said data values in parallel.

17. A process for calculating a convolution in a computerized processor in which:

coefficient values are representative a filter function;
data values are representative of a data function; and
there is multiplying of said coefficient values with said data values to produce result values that are collectively representative of the convolution; and
wherein:

said coefficient values are based on a derivation of the filter function.

18. The process of claim 17, further comprising performing said multiplying concurrently for a plurality of said data values in a plurality of said processors.

19. A signal processor comprising a system according to any one of claims 1 to 10 and 15 and 16, and means for providing, from a signal, the said data values which represent the signal.

20. A method of processing a signal, comprising deriving from a signal data values represents the signal and processing the data values in accordance with any one of claims 11 to 14 and 17 and 18.

21. A signal processor according to claim 19 which is a digital filter.

22. A method according to claim 20 of filtering a signal.

23. A computer program which when run in an array of computerized processors causes the array to implement the method of any one of claims 11 to 14, 20 or 22.

24. A carrier carrying the program of claim 23.

25. A carrier according to claim 24, which is a recording medium on which the program is recorded.

FIG. 1

FIG. 1

external output device — 22

external input device — 16

10

18

20

12

26

24

28

14v  14w  14x  14a  14b  14c

14u  14p  14o  14j  14i  14d

14t  14q  14n  14k  14h  14e

14s  14r  14m  14l  14g  14f

EP 1 978 450 A2

**Address Bus**     **Data Bus**

| 64-word RAM | 34 |

| 64-word ROM | 32 |

| A Register (18-bit) | 44 |

| B Register (9-bit) | |
46

| Program Counter | |
48

R - top of stack

8-Position Circular Return Stack

42

T
S    30    ALU    Result

T - top of stack
S - 2nd in stack

8-Position Circular Data Stack

40

14

| 36 | Instruction Decode Logic |

| 38 | Instruction Word |

| Up | 52, 52a |
| Down | 52, 52b |
| Left | 52, 52c |
| Right | 52, 52d |

| I/O Register | 50 |

I/O Pins

FIG. 2
(background art)

FIG. 3a

external
input
device

18

16

26

60

60
62
64

14a

14b

FIG. 3b

external
output
device

22

20

60
62
64

66

26

14w

14x

FIG. 3c

60
62
64

60
62
64

14j

26

14i

| $c_0$ | | $c_1$ | | $\bullet\ \bullet\ \bullet$ | | $c_n$ | 72, $72_{(0..n)}$ |
|---|---|---|---|---|---|---|---|

| 0 | | 0 | | $\bullet\ \bullet\ \bullet$ | | 0 | 74, $74_{(0..n)}$ |
|---|---|---|---|---|---|---|---|

76, $76_{(0..2n-1)}$

FIG. 4a

| $c_0$ | $c_1$ | $\bullet\ \bullet\ \bullet$ | $c_n$ | 72, $72_{(0..n)}$ |
|---|---|---|---|---|

$c_0 * d_0 \quad = a_0 \longrightarrow \quad c_1 * 0 + a_0 = a_1 \longrightarrow \bullet\ \bullet\ \bullet \longrightarrow c_n * 0 + a_{n-1} = a_n$

| $d_0$ | 0 | $\bullet\ \bullet\ \bullet$ | 0 | 74, $74_{(0..n)}$ |
|---|---|---|---|---|

76, $76_{(0..2n-1)}$

$a_n = r_0$

| $r_0$ |
|---|

FIG. 4b

$$c_0 \quad\quad c_1 \quad \cdots \quad c_n \qquad 72, \; 72_{(0..n)}$$

$$c_0 * d_1 \quad = a_0 \longrightarrow c_1 * d_0 + a_0 = a_1 \longrightarrow \cdots \longrightarrow c_n * 0 + a_{n-1} = a_n$$

$$d_1 \quad\quad d_0 \quad \cdots \quad 0 \qquad 74, \; 74_{(0..n)}$$

$$76, \; 76_{(0..2n-1)}$$

$$r_0$$

$$r_1$$

$$a_n = r_1$$

FIG. 4c

$$c_0 \quad\quad c_1 \quad \cdots \quad c_n \qquad 72, \; 72_{(0..n)}$$

$$c_0 * d_n \quad = a_0 \longrightarrow c_1 * d_{n-1} + a_0 = a_1 \longrightarrow \cdots \longrightarrow c_n * d_0 + a_{n-1} = a_n$$

$$d_n \quad\quad d_{n-1} \quad \cdots \quad d_0 \qquad 74, \; 74_{(0..n)}$$

$$76, \; 76_{(0..2n-1)}$$

$$r_0$$

$$r_1$$

$$\vdots$$

$$r_n$$

$$a_n = r_n$$

FIG. 4d

| $c_0$ | $c_1$ | $\cdots$ | $c_n$ |

$c_0 * 0 \quad = a_0 \longrightarrow c_1 * d_n + a_0 = a_1 \longrightarrow \cdots \longrightarrow c_n * d_1 + a_{n-1} = a_n$

$72,\ 72_{(0..n)}$

| $0$ | $d_n$ | $\cdots$ | $d_1$ |

$74,\ 74_{(0..n)}$

$76,\ 76_{(0..2n-1)}$

| $r_0$ |

$\vdots$

| $r_n$ |

| $r_{n+1}$ |

$a_n = r_{n+1}$

FIG. 4e

| $c_0$ | $c_1$ | $\cdots$ | $c_n$ |

$c_0 * 0 \quad = a_0 \longrightarrow c_1 * 0 + a_0 = a_1 \longrightarrow \cdots \longrightarrow c_n * d_n + a_{n-1} = a_n$

$72,\ 72_{(0..n)}$

| $0$ | $0$ | $\cdots$ | $d_n$ |

$74,\ 74_{(0..n)}$

$76,\ 76_{(0..2n-1)}$

| $r_0$ |

$\vdots$

| $r_n$ |

| $r_{n+1}$ |

$\vdots$

| $r_{2n-1}$ |

FIG. 4f

$a_n = r_{2n-1}$

| $c'_0$ | | $c'_1$ | | ••• | | $c'_m$ | 82,<br>$82_{(0..m)}$ |

| 0 | | 0 | | ••• | | 0 | 84,<br>$84_{(0..m)}$ |

88, $88_{(0..2m-1)}$        86

**FIG. 5a**

| $c'_0$ | | $c'_1$ | | ••• | | $c'_m$ | 82,<br>$82_{(0..m)}$ |

$c'_0 * d_0$    $= a_0 \longrightarrow$    $c'_1 * 0 + a_0 = a_1 \longrightarrow$ ••• $\longrightarrow$ $c'_m * 0 + a_{m-1} = a_m$

| $d_0$ | | 0 | | ••• | | 0 | 84,<br>$84_{(0..m)}$ |

88, $88_{(0..2m-1)}$      $p_0 + 0 = r_0$

| $r_0$ | $\longleftarrow$ | | $\longleftarrow$ |

$a_m = p_0$

86

**FIG. 5b**

FIG. 5c

FIG. 5d

| $c'_0$ | | $c'_1$ | | $\cdots$ | | $c'_m$ | $\leftarrow$ 82, |
|---|---|---|---|---|---|---|---|

$c'_0 * 0 \qquad = a_0 \longrightarrow \quad c'_1 * d_m + a_0 = a_1 \longrightarrow \cdots \longrightarrow c'_m * d_1 + a_{m-1} = a_m$

$82_{(0..m)}$

| 0 | | $d_m$ | | $\cdots$ | | $d_1$ | $\leftarrow$ 84, |
|---|---|---|---|---|---|---|---|

$84_{(0..m)}$

88, $88_{(0..2m-1)}$

| $r_0$ |
|---|

FIG. 5e

$\vdots$

| $r_m$ |
|---|

$p_{m+1} + p_m = r_{m+1}$

| $r_{m+1}$ | $\leftarrow$ | | $a_m = p_{m+1}$ |
|---|---|---|---|

$\lfloor$ 86

| $c'_0$ | | $c'_1$ | | $\cdots$ | | $c'_m$ | $\leftarrow$ 82, |
|---|---|---|---|---|---|---|---|

$c'_0 * 0 \qquad = a_0 \longrightarrow \quad c'_1 * 0 + a_0 = a_1 \longrightarrow \cdots \longrightarrow c'_m * d_m + a_{m-1} = a_m$

$82_{(0..m)}$

| 0 | | 0 | | $\cdots$ | | $d_m$ | $\leftarrow$ 84, |
|---|---|---|---|---|---|---|---|

$84_{(0..m)}$

88, $88_{(0..2m-1)}$

| $r_0$ |
|---|

$\vdots$

| $r_m$ |
|---|

FIG. 5f

| $r_{m+1}$ |
|---|

$\vdots$

$p_{2m-1} + p_{2m} = r_{2m-1}$

86

| $r_{2m-1}$ | $\leftarrow$ | | $a_m = p_{2m-1}$ |
|---|---|---|---|

FIG. 6a

FIG. 6b

FIG. 6c

EP 1 978 450 A2

700

```
machine
[ 0 org ]
[ $15D equ IO ]
[ 123 equ H ]
\ protocol: ((s)ample -> (a)ccumulate)*
: fpe
        IO    b!    H      .              \ h
        begin
[ fpe-type MID = ] [if]
        @b    @b    push  dup            \ h s s        a
        push  MULT                       \ h a'         s a
        pop   !b    pop   .
        +                                \ h a"
[then]
[ fpe-type FIRST = ] [if]
        @b    dup   push  .              \ h s          s
        MULT
        pop   !b    pop   .              \ h s
[then]
[ fpe-type LAST = ] [if]
        @b    @b    push  .              \ h s          a
        MULT
        pop   .     +     .              \ h a"
[then]
        !b    again                      \ h
[
```

FIG. 7

800 (part 1 of 2)

```
machine
[ 0 org ]
[ $15D equ IO ]
[ 123 equ H ]
\ protocol: ((s)ample -> (a)ccumulate)*
: fpe
        IO      b!      H       .               \ h
        0       push    .       .               \ h             p
        begin
[ fpe-type MID = ] [if]
        @b      @b      push    dup             \ h s s         a
        push    +*      +*      +*              \ h a'          s a
        +*      +*      +*      +*
        +*      +*      pop     .               \ h a' s
        !b      pop     .       +               \ h a"
[then]
[ fpe-type FIRST = ] [if]
        @b      dup     push    +*              \ h s           s
        +*      +*      +*      +*
        +*      +*      +*      +*              \ h a'          s
        pop     !b      pop     .               \ h s
[then]
[ fpe-type LAST = ] [if]
        @b      @b      push    +*              \ h s           a p
        +*      +*      +*      +*
        +*      +*      +*      +*              \ h a'          a p
        pop     .       +       .               \ h a"          p
        pop     .       +       .               \ h a"
        dup     pop     .       .               \ h a"          p'
[then]
        !b      again                           \ h             p'
[
```

804

802

806
808

FIG. 8a

800 (part 2 of 2)

```
\ A - input
\ B - output

:out
        IO #  b!  $3f #  a!
        dup dup xor        \ 0
        begin
          @b + dup !a
        again
```

FIG. 8b